# EUROPÄISCHE PATENTANMELDUNG

(11) **EP 0 919 350 A2**
(43) Veröffentlichungstag der Anmeldung: **02.06.1999**
(21) Anmeldenummer: 98121801.9
(22) Anmeldetag: 17.11.1998
(51) Int. Cl.: B29C 44/36

(54) **Verfahren und Vorrichtung zur Herstellung von Polyurethan-Formkörpern**

(30) Priorität: 28.11.1997 DE 19752749
(71) Anmelder: Hennecke GmbH, 51379 Leverkusen (DE)
(72) Erfinder: Sulzbach, Hans-Michael, 53639 Königswinter (DE)
(74) Vertreter: Drope, Rüdiger, Dr.

(57) **Zusammenfassung**

Es wird ein Verfahren zur Herstellung von Polyurethan-Formkörpern durch simultanes Fördern mindestens einer Polyolkomponente und mindestens einer Isocyanatkomponente mittels Kolbenverdränger-Dosierpumpen (2) zu einem Mischaggregat (1) und schußweises Eintragen der vermischten Komponenten in eine Form beschrieben, wobei mittels am Einlaß zur Mischkammer des Mischaggregates (1) vorgesehener Ventile (2) für jede Komponente nach Beendigung des Schusses die Zufuhr zum Mischaggregat (1) unterbrochen wird und in dem Zeitraum bis zur nächsten Formfüllung die Komponenten zum Zwecke der Konditionierung von Zufuhrleitungen, Pumpen und Mischaggregateingang über eine Rückführleitung (5) zu dem jeweiligen Vorratsbehälter (3,3') für die Komponente im Kreislauf geführt werden, wobei zwischen Vorratsbehälter und Dosierpumpe eine zusätzliche Kreislaufförderpumpe (6) vorgesehen ist, die bei geschlossenem Einlaßventil zum Mischaggregat die Förderung übernimmt und die während des Kolbenhubes abgeschaltet ist.

## Beschreibung

Die vorliegende Erfindung betrifft ein Verfahren zur Herstellung von Polyurethan-Formkörpern durch simultanes Fördern mindestens einer Polyolkomponente und mindestens einer Isocyanatkomponente mittels Kolbenverdränger-Dobanol Dosierpumpen zu einem Mischaggregat und schußweises Eintragen der vermischten Komponenten in eine Form, wobei mittels am Einlaß zur Mischkammer des Mischaggregates vorgesehener Ventile für jede Komponente nach Beendigung des Schusses die Zufuhr zum Mischaggregat unterbrochen wird und in dem Zeitraum bis zur nächsten Formfüllung die Komponenten zum Zwecke der Konditionierung von Zufuhrleitungen, Pumpen und Mischaggregateingang über eine Rückführleitung zu dem jeweiligen Vorratsbehälter für die Komponente im Kreislauf geführt werden.

Derartige Verfahren und für die Durchführung derartiger Verfahren geeignete Vorrichtungen sind aus den Firmenschriften der Hennecke GmbH, D-53754 Sankt Augustin, Ti 27 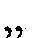 Hedomat" (3T / 8/83 Ha) und Ti 32 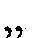 Rimdomat" (3T / 11/86 Ha) bekannt.

Weiterhin ist es aus der DE-A 44 05 427 bei der kontinuierlichen Blockschaumherstellung bekannt, zwei kontinuierlich betriebene Mischköpfe mit Auslaufrohr zur Aufrechterhaltung des kontinuierlichen Betriebes, bei dem das Auslaufrohr allmählich mit ausgehärtetem Polyurethan zugesetzt wird, abwechselnd zu betreiben, so daß das Auslaufrohr des jeweils nicht in Betrieb befindlichen Mischkopfes gereinigt bzw. ausgetauscht werden kann. Bei dem bekannten Verfahren wird der jeweils in Betrieb befindliche Mischkopf mittels kalibrierter Dosierpumpen mit den Komponenten der Polyurethan-Reaktionsmischung beschickt. Der jeweils nicht in Betrieb befindliche Mischkopf und die zugehörigen Leitungen werden dabei zur Aufrechterhaltung der Luftblasenfreiheit des Leitungssystems und der Temperatur von Leitungssystem und Mischkopf über eine getrennte Konditionierpumpe weiterhin von den Komponenten durchströmt, wobei die Komponenten zu ihren jeweiligen Vorratsbehältern zurückgeführt werden. Dabei kann die Konditionierpumpe kleiner dimensioniert und weniger aufwendig, weil nicht kalibriert, sein als die Dosierpumpe. Bei dem bekannten Verfahren sind beide Pumpen überwiegend gleichzeitig in Betrieb; sie Fördern - über entsprechende Ventile gesteuert - lediglich abwechselnd zu dem einen oder dem anderen Mischkopf.

Dagegen betrifft das erfindungsgemäße Verfahren den 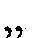 Schußbetrieb", bei dem die Komponenten durch den einmaligen Kolbenhub der diesen zugeordneten Kolbenverdränger-Dosierpumpen jeweils durch den Kolbendurchmesser und die Schußlänge definierte Mengen jeder Komponente in das Mischaggregat gedrückt, dort vermischt und anschließend in die Form injiziert werden. Der Mischaggregatauslaß wird anschließend von der Form getrennt und an eine neue Form angeschlossen, so daß der nächste 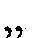 Schuß" erfolgen kann. Nach dem eingangs zitierten, in den Firmenschriften der Hennecke GmbH dargestellten Stand der Technik erfolgt die Konditionierung der Anlage zwischen den 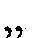 Schüssen" durch Förderung und Rezirkulation der Komponenten mittels der Kolbendosierpumpe, die zwischen den Schüssen hierfür zur Verfügung steht.

Ein Problem besteht darin, daß die Kolbendosierpumpen, die insbesondere zur dosierten Förderung hochviskoser, gegebenenfalls mit Füllstoffen angereicherter Medien geeignet sind, für relativ langsame Kolbenhubgeschwindigkeiten ausgelegt sind. Es hat sich gezeigt, daß die Konditionierung durch zwischen den 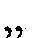 Schüssen" durchgeführte Kolbenhübe und Rückführung der Komponente zum Vorratsbehälter in vielen Fällen unzureichend ist, d.h., das Leitungssystem und die Pumpe selbst nicht hinreichend gleichmäßig temperiert werden, so daß Viskositätsschwankungen der Komponenten nicht hinreichend sicher vermieden werden können. Das Problem wird insbesondere dann verstärkt, wenn lediglich mit geringem Kolbenvolumen von wenigen Litern gearbeitet wird und beispielsweise Dosierleistungen der Dosierpumpe von 5 bis 100 cm³/sec. gefahren werden.

Ein weiteres Problem im Rahmen zunehmender Automatisierung ist die Begrenzung der Schußfrequenz durch die erforderliche Füllzeit für den Dosierzylinder der Kolbendosierpumpe nach einem Schuß. Die Füllzeit wird durch die Saugleistung des Dosierkolbens bestimmt, die im Gegensatz zur Dosierleistung durch erheblich geringere Druckdifferenzen begrenzt ist.

Erfindungsgemäß wird daher vorgeschlagen, zwischen Vorratsbehälter und Kolbendosierpumpe jeweils eine zusätzliche Kreislaufförderpumpe vorzusehen, die bei geschlossenem Einlaßventil zum Mischaggregat die Förderung übernimmt und die während des Kolbenhubes abgeschaltet ist.

Die zusätzliche Kreislaufförderpumpe braucht keine kalibrierbare Förderleistung aufzuweisen, da sie nicht für Dosierzwecke eingesetzt wird. Ihre Förderleistung ist vorzugsweise erheblich höher als die der Kolbendosierpumpe, so daß der zwischen den Schüssen im Kreislauf geförderte Komponentenstrom für eine sichere Konditionierung zur Verfügung steht und ferner die Füllzeit der Dosierzylinder erheblich verkürzt wird.

Als Mischaggregate werden erfindungsgemäß bevorzugt Hochdruck-Gegenstrominjektionsmischer mit Ausstoßkolben eingesetzt, wie sie beispielsweise in Becker/Braun, Kunststoff Handbuch, Band 7, Polyurethane, Carl Hanser Verlag München und Wien, 1993, Seiten 177-181, beschrieben sind. Derartige Mischaggregate weisen Einlaßkanäle zur Mischkammer mit relativ geringem Durchmesser und nahe an den Injektionsdüsen integrierte Umschaltventile zwischen 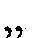 Schuß" und Rückführung der Komponente zum Zwecke der Konditionierung auf.

Bevorzugt wird daher zwischen Zuleitung zum Mischaggregat und Rückführleitung zum Vorratsbehälter ein mit einem Ventil versehender Bypass vorgesehen, wobei das Bypass-Ventil zwischen den Schüssen geöffnet wird, um den Strömungswiderstand beim Konditionierkreislauffahren zu reduzieren.

Als zusätzliche Kreislaufförderpumpe wird vorzugsweise eine Zahnrad- oder Schraubenspindelpumpe eingesetzt, deren Förderleistung das 1,5- bis 10fache, besonders bevorzugt das 1,5- bis 3fache der Dosierleistung der Kolbendosierpumpe beträgt.

Gegenstand der vorliegenden Erfindung ist auch eine Vorrichtung zur Durchführung des erfindungsgemäßen Verfahrens, wobei die Vorrichtung ein Mischaggregat und je Komponente einen Vorratsbehälter, eine Kreislaufförderpumpe, eine Kolbenverdränger-Dosierpumpe mit Zuleitung zum Mischaggregat und eine Rückführleitung vom Mischaggregateinlaß zum Vorratsbehälter sowie Ventile und Steuereinrichtungen zur simultanen Durchführung der Kolbenhübe der Dosierpumpen unter vorheriger Abschaltung der Kreislaufförderpumpen und Absperrung der Rückführleitungen aufweist.

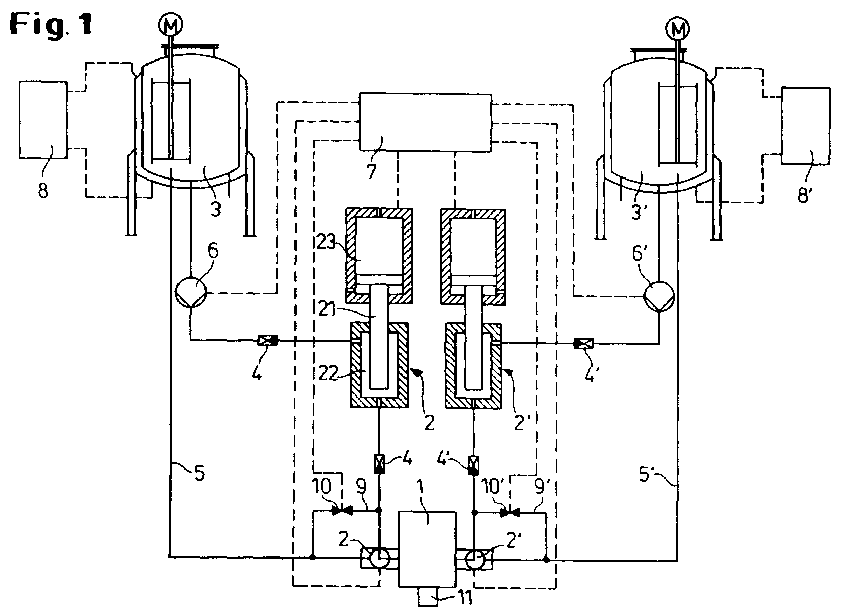

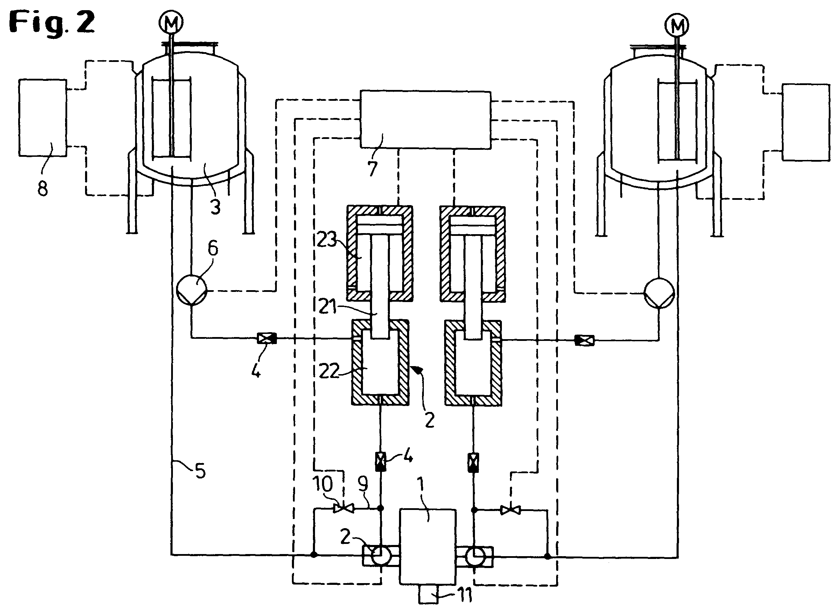

Die Erfindung wird nachfolgend anhand der beigefügten Fig. 1 und 2 erläutert.
- Fig. 1: zeigt eine erfindungsgemäße Vorrichtung während des Schußbetriebes.
- Fig. 2: zeigt die Vorrichtung gemäß Fig. 1 während des Kreislauffahrens zur Konditionierung.

Fig. 1 zeigt schematisch einen Hochdruckinjektionsmischkopf 1, dessen Auslauf 11 an eine nicht dargestellte Form angesetzt ist. Die Kolbendosierpumpe 2, bestehend aus dem Dosierzylinder 22 und dem Verdrängerkolben 21, der mittels Hydraulik 23 bewegt wird, fördert durch das Rückschlagventil 4 und das am Einlaß zur Mischkammer vorgesehene Umschaltventil 2 in die nicht dargestellte Mischkammer des Gegenstrominjektionsmischers 1. Die Schraubenspindelpumpe 6 ist abgestellt. Das Ventil 10 in der Bypass-Leitung 9 ist geschlossen. Die im wesentlichen simultane Anordnung für die andere Komponente trägt identische Ziffern mit einem Strich.

Bevor der Dosierkolben 21 seine Endstellung erreicht hat, wird das Umschaltventil 2 am Einlaß des Mischaggregates 1 umgeschaltet, so daß der Einlaß zur Mischkammer versperrt ist und die Zuleitung von der Kolbendosierpumpe 2 zum Mischaggregat 1 an die Rezirkulationsleitung 5 angeschlossen ist. Jetzt wird die beispielsweise als Schraubenspindelpumpe ausgeführte zusätzliche Kreislaufförderpumpe 6 eingeschaltet, die aus dem Vorratsbehälter 3 für die Komponente in den Dosierzylinder 22 fördert, während der Dosierkolben 21 mittels der Hydraulik 23 zurückgefahren wird (Fig. 2).

Gleichzeitig wird die Komponente durch den Dosierzylinder 22 und das Umschaltventil 2 in die Rückführleitung 5 gefördert. Der Vorratsbehälter 3 ist mit einer Temperiervorrichtung 8 ausgestattet und wird auf konstanter Temperatur gehalten. Zur Erniedrigung des Strömungswiderstandes beim Kreislauffahren der Komponente wird das Ventil 10 der Bypass-Leitung 9 geöffnet. Das Kreislauffahren der Komponente mittels der zusätzlichen Kreislaufförderpumpe 6 mit Rückführung der Komponente in den temperierten Vorratsbehälter 3 über Leitung 5 sorgt dafür, daß alle Anlagenteile zwischen den Schüssen auf konstanter Temperatur gehalten werden und ferner, daß bei Schußbeginn richtig temperierte Komponenten am Mischaggregat anstehen. Zur Einleitung des Schusses wird die Pumpe 6 abgestellt, das Bypass-Ventil 10 geschlossen und das Umschaltventil 2 geschaltet. Anschließend wird der Dosierkolben 21 mittels Hydraulik in den Dosierzylinder eingefahren (Schuß). Die phasenrichtige Schaltung der Ventile sowie die Steuerung der Pumpen und die Synchronisierung der Dosierkolben für die mindestens zwei Komponenten erfolgt über ein Steuergerät 7.

## Patentansprüche

1. Verfahren zur Herstellung von Polyurethan-Formkörpern durch simultanes Fördern mindestens einer Polyolkomponente und mindestens einer Isocyanatkomponente mittels Kolbenverdränger-Dosierpumpen zu einem Mischaggregat und schußweises Eintragen der vermischten Komponenten in eine Form, wobei mittels am Einlaß zur Mischkammer des Mischaggregates vorgesehener Ventile für jede Komponente nach Beendigung des Schusses die Zuführ zum Mischaggregat unterbrochen wird und in dem Zeitraum bis zur nächsten Formfüllung die Komponenten zum Zwecke der Konditionierung von Zufuhrleitungen, Pumpen und Mischaggregateingang über eine Rückführleitung zu dem jeweiligen Vorratsbehälter für die Komponente im Kreislauf geführt werden, dadurch gekennzeichnet, daß zwischen Vorratsbehälter und Dosierpumpe jeweils eine zusätzliche Kreislaufförderpumpe vorgesehen ist, die bei geschlossenem Einlaßventil zum Mischaggregat die Förderung übernimmt und die während des Kolbenhubes abgeschaltet ist.

2. Verfahren nach Anspruch 1, wobei als Kreislaufförderpumpe eine Zahnrad- oder Schraubenspindelpumpe eingesetzt wird.

3. Verfahren nach Anspruch 1 oder 2, wobei die Förderleistung der Kreislaufförderpumpe die Förderleistung der Dosierpumpe übersteigt.

4. Verfahren nach Anspruch 3, wobei zwischen Zufuhrleitung zum Mischaggregat und Rückführleitung eine mit einem Ventil versehene Bypass-Leitung vorgesehen ist und das Ventil während des Kolbenhubes geschlossen ist.

5. Vorrichtung zur Durchführung des Verfahrens nach einem der Ansprüche 1 bis 4, enthaltend ein Mischaggregat und je Komponente einen Vorratsbehälter, eine Kreislaufförderpumpe, eine Kolbenverdränger-Dosierpumpe mit Zuleitung zum Mischaggregat und eine Rückführleitung vom Mischaggregateinlaß zum Vorratsbehälter sowie Ventile und Steuereinrichtungen zur simultanen Durchführung der Kolbenhübe der Dosierpumpen unter vorheriger Abschaltung der Kreislaufförderpumpen und Absperrung der Rückführleitungen.
